# EUROPÄISCHE PATENTANMELDUNG

(11) **EP 1 887 336 A2**
(43) Veröffentlichungstag der Anmeldung: **13.02.2008**
(21) Anmeldenummer: 07015501.5
(22) Anmeldetag: 07.08.2007
(51) Int. Cl.: G01L 5/28

(54) **Vorrichtung zur Prüfung von elektrischen Feststell- bzw. Parkbremsen von Fahrzeugen**

(30) Priorität: 11.08.2006 DE 102006037772
(71) Anmelder: MAHA Maschinenbau Haldenwang GmbH & Co. KG, 87490 Haldenwang (DE)
(72) Erfinder: Knestel, Anton, 87496 Hopferbach (DE)
(74) Vertreter: Beetz & Partner

(57) **Zusammenfassung**

Die Erfindung betrifft eine Vorrichtung zur Prüfung von elektrischen Feststell- bzw. Parkbremsen von Fahrzeugen, mit zwei Rollenpaaren 4, 4' die jeweilig mit einem Antrieb 5, 5' verbunden sind, wobei die Antriebe 5, 5' mit jeweils einer Kraftmesseinrichtung 6, 6' zur Erfassung eines Bremsmoments gekoppelt sind, Tastrollen 7, 7', die zwischen den Rollenpaaren 4, 4' angeordnet sind und einer Steuereinheit zum Ansteuern der Antriebe 5, 5',wobei zur Prüfung der elektrischen Feststell- bzw. Parkbremse die Antriebe 5, 5' von der Steuereinheit derart angesteuert werden, dass bei stehendem Fahrzeug und nach einer Aktivierung der Feststell- bzw. Parkbremse die Antriebe 5, 5' durch ein kontinuierliches Steigern des Antriebsmoments gestartet werden und durch eine Überwachung der Drehzahlen bzw. Drehgeschwindigkeiten der Rollenpaare 4, 4' und der Tastrollen 7,7' eine Prüfung der elektrischen Feststell- bzw. Parkbremse durchgeführt wird.

## Beschreibung

Die Erfindung betrifft eine Vorrichtung und ein Verfahren zur Prüfung von elektrischen Feststell- bzw. Parkbremsen von Fahrzeugen, die eine zweckmäßige, genaue und einfache Prüfung erlauben, insbesondere im Zusammenhang mit schon vorhandenen Bremsenprüfständen. Erfindungsgemäß kann eine physikalisch richtige Prüfung von Feststell- bzw. Parkbremsen mit einem Prüfstand erfolgen, der zwei Rollenpaare aufweist, die über zwei getrennte Antriebe mit jeweils gekoppelter Kraftmesseinrichtung angetrieben werden.

Zum Prüfen von Fahrzeugbremsen werden in der Regel sog. Rollenprüfstände oder Plattenprüfstände verwendet.

Bei Rollenprüfständen werden zwei unabhängige Rollenpaare verwendet, die über zwei getrennte Antriebe angetrieben werden. Die Antriebsmomente der beiden unabhängigen Antriebe werden hierbei erfasst und zur Anzeige gebracht. Zwischen den beiden Prüfrollen wird in der Regel eine sog. Tastrolle installiert, die dazu dient, dass bei einem etwaig auftretenden, zu großen Reifenschlupf die Antriebe angehalten bzw. abgeschaltet werden können. Dadurch kann bei einem auftretenden übermäßigen Reifenschlupf eine eventuelle Zerstörung der Reifenoberfläche verhindert werden. Hierbei ist eine Überwachung der Tastrollendrehzahl ausreichend, da die Geschwindigkeit der Antriebsrollen während der Prüfung im Wesentlichen konstant bleibt, so dass das Absenken der Tastrollendrehzahl als Reifenschlupf erkannt werden kann.

Damit direkt nach dem Einschalten der Antriebe die Schlupfüberwachung nicht sofort aktiv wird und die Antriebe wieder abgeschaltet werden, wird eine sog. Überbrückungszeit aktiviert. Die Schlupfabschaltung wird erst nach dem Hochlaufen der Antriebe und nach Ablauf der Überwachungszeit aktiv.

Bei Plattenprüfständen wird das Prüffahrzeug auf niedrig bauende Bremsplatten gefahren und nach dem Erreichen der richtigen Position werden die Fahrzeugbremsen aktiviert und dabei werden die Bremskräfte der Räder durch Verschieben der Bremsplatten gegen einen Kraftsensor ermittelt. Eine Schlupfüberwachung wie bei den oben beschriebenen Rollenprüfständen ist hierbei jedoch nicht möglich.

Bei normalen Kraftfahrzeugen sind außer der Betriebsbremse (Fußbremse), die auf in der Regel zwei hydraulische Kreise aufgeteilt ist, eine Feststellbremse (Handbremse) verfügbar. Für die Feststellbremse ist kein hydraulisches System, sondern ein mechanisch wirkendes System vorgeschrieben, da diese Bremse unter Umständen über längere Zeiträume aktiv bleiben muss. Die Feststellbremse dient des Weiteren beim Versagen der Betriebsbremse als Notbremseinheit, d. h. bei Versagen der Betriebsbremse kann das Fahrzeug durch zwischenzeitliches Bedienen des Feststellbremshebels verzögert werden.

Neuerdings kommen immer mehr Fahrzeuge auf den Markt, die über sog. elektrische bzw. elektronische Parkbremssysteme verfügen. Während bei einem konventionellen Parkbremssystem die oben beschriebenen Prüfverfahren keine Schwierigkeiten bereiten, sind die neueren Systeme mit herkömmlichen Prüfständen nicht mehr ohne weiteres prüfbar.

Bei einem konventionellen Handbremssystem wird das Fahrzeug in der Regel nach dem Prüfen der Betriebsbremse mit der Achse in den Rollensatz gefahren, auf die die Feststellbremse wirkt. Nach dem Starten der Motoren des Prüfstandes und dem Ablauf der Überbrückungszeit wird der Bremshebel langsam betätigt und die Bremskraft solange erhöht, bis der maximale Radschlupf erreicht ist oder das Fahrzeug aus dem Rollenprisma geschoben wird.

Bei Plattenprüfständen erfolgt die Prüfung der Feststellbremse in gleicher Form. In der Regel wird nach dem Prüfen der Betriebsbremse das Fahrzeug zurückgesetzt. Danach wird erneut mit der zu prüfenden Achse über die Bremsplatte gefahren und die Park- bzw. Feststellbremse betätigt. Die dabei auftretenden Stützmomente an den Bremsplatten werden als Feststellbremswerte angezeigt.

Bei elektronischen Bremssystemen werden zum Betätigen der mechanischen Feststell- bzw. Parkbremse elektrische Stellantriebe verwendet. Die Fahrzeugelektronik ist hierbei in der Lage zu unterscheiden, ob sich das Fahrzeug im Fahrbetrieb oder im Stillstand befindet. Im Fahrbetrieb wird die Parkbremse wie oben erwähnt als Notbremse benutzt, d. h. die Fahrzeugelektronik steuert beim Betätigen des Bremsknopfes während der Fahrt das Fahrzeugbremssystem so an, dass eine ausreichende Bremsverzögerung erreicht wird.

Das Einrücken der eigentlichen Parkbremse wird jedoch nur bei Fahrzeugstillstand gewährleistet.

Dadurch ist ein Prüfen von elektrischen Feststell- bzw. Parkbremsen auf Plattenprüfständen nicht mehr möglich, da prinzipbedingt beim Plattenprüfstand das Fahrzeug auf die Platte gefahren werden muss und beim Betätigen des Bremsknopfes das eigentliche Bremssystem und nicht die Parkbremse aktiviert wird. Als Aushilfsverfahren kann das Fahrzeug auf den Plattenprüfstand gefahren werden, wobei nach Erreichen des Stillstandes die Parkbremse aktiviert wird. Mit entsprechenden Hilfsmitteln kann das Fahrzeug von dem Plattenprüfstand gezogen oder geschoben werden. Die so resultierenden Reaktionskräfte der Bremsplatten können dann der Parkbremse zugeordnet werden. Dieses Vorgehen ist jedoch aufwendig und umständlich.

Bei Rollenprüfständen herkömmlicher Bauart kann die Parkbremse dadurch geprüft werden, dass sie vor dem Starten der Antriebe betätigt wird. Beim Starten der Antriebe ist jedoch die Reifenschlupferkennung nicht aktiviert und dadurch kann eine Beschädigung der Fahrzeugreifen die Folge sein.

Die verschiedenen Fahrzeughersteller behelfen sich mit unterschiedlichen Prüfmethoden. So wird teilweise die Geschwindigkeit der Vorderachse zur Selektion Bremse/Parkbremse benutzt. Bei der Prüfung im Rollenprüfstand stehen die vorderen Räder still. Dadurch wird automatisch die Parkbremse ausgelöst. Andere Hersteller wiederum aktivieren die Parkbremse über die Sicherheitsgurterkennung. Hier sind teilweise recht umfangreiche, fahrzeugspezifische Prüfabläufe einzuhalten, die den Prüfvorgang unsicher und sehr aufwendig gestalten.

Es ist weiterhin anzunehmen, dass sich die neue Technik der elektrischen Feststell- bzw. Parkbremsen rasch in der Fahrzeugproduktpalette ausbreiten wird, wodurch die Fahrzeugprüfer durch die unterschiedlichen Handhabungen der vielen Marken und Modellvarianten stark gefordert und eventuell sogar überfordert sein könnten.

Es ist eine Aufgabe der Erfindung, eine Vorrichtung und ein Verfahren zur Prüfung von elektrischen Feststell- bzw. Parkbremsen von Fahrzeugen zu schaffen, die eine zweckmäßige, genaue und einfache Prüfung erlauben.

Die Aufgabe wird gemäß den Merkmalen der unabhängigen Patentansprüche gelöst. Die abhängigen Patentansprüche betreffen vorteilhafte Ausführungsformen und Weiterentwicklungen der Erfindung.

Insbesondere kann die erfindungsgemäße Vorrichtung in einem bestehenden Rollenbremsprüfstand integriert werden, wobei dieser Rollenbremsprüfstand in einen speziellen Prüfmodus geschaltet werden kann, der die Prüfung von elektrischen Feststell- bzw. Parkbremsen von Fahrzeugen erlaubt.

Erfindungsgemäß kann die Schlupfmesseinrichtung über die vorgesehene Tastrolle realisiert werden. Hierbei können an der Tastrolle beispielsweise Tachogeneratoren oder Impulsgeber Verwendung finden. Bei Tachogeneratoren kann die erzeugte Generatorenspannung überwacht und wenn ein minimaler Grenzwert überschritten wird, können die Antriebe vom Netz getrennt werden. Bei der Verwendung von Inkrementalsystemen kann die Drehfrequenz (Drehzahl) bezüglich eines Minimalwerts überwacht werden und bei Unterschreitung des Minimalwerts können ebenfalls die Antriebe abgeschaltet werden.

Weiterhin kann die Schlupfmesseinrichtung (Inkrementalgeber und/oder Tachogenerator) nicht mehr auf einen festen Grenzwert bezogen werden, sondern auf einen prozentualen Grenzwert der Bremsrollendrehzahl, die von der Bremsrolle vorgegeben wird, d. h. es wird an der Bremsrolle und an der Tastrolle jeweils eine Drehzahl bzw. eine Drehgeschwindigkeit abgenommen, wobei eine Steuereinheit bei Überschreiten der abgenommenen Differenz der beiden Drehzahlen, bzw. Drehgeschwindigkeiten kann das jeweilige Rollenpaar stillsetzen kann.

Weiterhin ist es von Vorteil, dass die Antriebsmotoren der Rollenpaare nicht direkt (schlagartig) gestartet werden, sondern kontinuierlich über beispielsweise einen Softstarter weich anlaufen, bzw. das Antriebsmoment langsam von Null kontinuierlich auf ein Maximum gesteigert wird. Dies kann beispielsweise innerhalb von 10 sec erfolgen.

Weiterhin kann eine Prüfung eines elektronischen Feststell- bzw. Parkbremssystems auf einer erfindungsgemäßen Vorrichtung und entsprechend modifiziertem Prüfstand wie folgt erfolgen. Zunächst kann der Prüfstand in einem Feststell- bzw. Parkbremsprüfmodus geschaltet werden. Nach dem Befahren des Prüfstands und dem Ablauf eine Beruhigungszeit können die Antriebe über einen Softstarter bestromt werden. Bei einem Funktionieren der Parkbremse werden die Rollen (die Rollenpaare) durch die aktive Parkbremse festgehalten. Das Antriebsmoment der Antriebe wird über den Softstarter kontinuierlich erhöht, sodass die ermittelten Bremskräfte angezeigt werden können, ohne dass sich am Prüfstand eine Rolle dreht. Dieser Vorgang kann fortgesetzt werden, bis beispielsweise die gesetzlich vorgeschriebene Bremskraft erreicht ist. Danach können die Antriebe abgeschaltet werden und die maximal erreichten Bremskräfte können gespeichert werden. Dies kann über die Steuereinheit erfolgen. Sind die gesetzlich vorgeschriebenen Werte (bzw. das Fahrzeuggewicht) vor der Prüfung nicht bekannt, können die Antriebsmomente soweit erhöht werden, bis sich das zu prüfende Rad zu drehen beginnt. Dies kann durch die Sensoren an der Tastrolle und der Bremsrolle festgestellt werden (durch die Messmittel und die Abtastmittel). Beim Losbrechen des jeweiligen Fahrzeugrades kann die entsprechende Bremskraft gespeichert werden und danach mit dem gesetzlichen Mindestwert verglichen werden.

Bei einer gut funktionierenden Parkbremse wird sich bei ansteigendem Bremsmoment in den meisten Fällen die Parkbremse nicht lösen, sondern der Kontakt Räder/Rolle als schwächstes Glied in der Kette abbrechen (d.h. die Räder rutschen durch). Dies kann dadurch erkannt werden, dass der Sensor an den Bremsrollen (Abtastmittel) eine Drehzahl ausgibt, während der Sensor an der Tastrolle (Messmittel), die eine Bewegung des Fahrzeugrades angibt, weiterhin keine Drehzahl- bzw. Drehgeschwindigkeitsausgabe auf weist. In diesem Fall kann der Drehzahlanstieg an der Bremsrolle (Rollenpaar) zum Auslösen des Speichervorgangs und zum Stillsetzen des Antriebs des Rollenpaars verwendet werden.

Erfindungsgemäß können die Antriebe der Rollenpaare von der Steuereinheit derart angesteuert werden, dass bei stehendem Fahrzeug und nach einer Aktivierung der Feststell- bzw. Parkbremse die Antriebe durch ein kontinuierliches Hochfahren des Antriebsmoments gestartet werden und durch eine Überwachung der Drehzahlen bzw. Drehgeschwindigkeiten der Rollenpaare und der Tastrollen eine Prüfung der elektrischen Feststell- bzw. Parkbremse durchgeführt wird.

Hierbei können Messmittel vorgesehen sein, die eine Drehzahl bzw. eine Drehgeschwindigkeit der Tastrollen erfassen. Weiterhin können Abtastmittel vorgesehen sein, die eine Drehzahl bzw. Drehgeschwindigkeit der Rollenpaare erfassen.

Als Messmittel und als Abtastmittel können verschiedene Arten von Sensoren eingesetzt werden.

Weiterhin kann die Steuereinheit die Drehzahl bzw. Drehgeschwindigkeit der Tastrollen und der Rollenpaare vergleichen, eine Differenz ermitteln, diese Differenz mit einem vorbestimmten Differenzwert vergleichen und bei der Ermittlung eines Überschreitens des vorbestimmten Differenzwertes die Antriebe entsprechend abschalten. Der maximale Bremsmomentwert, der durch die Kraftmesseinrichtung ermittelt wurde, kann als maximaler Bremsmomentwert der Feststell- bzw. Parkbremse gespeichert bzw. ausgegeben werden. Dies kann durch die Steuereinheit erfolgen.

Weiterhin kann die Steuereinheit die Messsignale der Messmittel und der Abtastmittel aufnehmen und während dem kontinuierlichen Hochfahren der Antriebsmomente der Antriebe die Drehzahlen bzw. Drehgeschwindigkeiten und die Signale der Kraftmesseinrichtung überwachen. Dies kann erfolgen, bis ein vorbestimmtes Bremsmoment erreicht ist, bis sich zumindest ein zu prüfendes Fahrzeugrad zu drehen beginnt und/ oder bis der Kontakt zwischen Fahrzeugrad und Rollenpaar abbricht (d.h. die Räder rutschen durch).

Die Antriebe können weiterhin über eine Startvorrichtung gestartet werden, wobei die Startvorrichtung eine durch einen Thyristor gesteuerte Startvorrichtung sein kann. Die Startvorrichtung kann auch ein Frequenzumrichter sein.

Die erfindungsgemäße Vorrichtung bzw. das erfindungsgemäße Verfahren können in einem Bremsenprüfstand integriert werden, der durch einen entsprechenden Park- bzw. Feststellbremsprüfmodus die vorstehend genannten Funktionen ausüben kann. Dadurch kann der Bremsenprüfstand in vorteilhafter Weise auch elektronische bzw. elektrische Feststell- bzw. Parkbremsen von Fahrzeugen prüfen.

Im Folgenden werden anhand von schematischen Figuren beispielhaft Ausführungsformen der Erfindung näher erläutert. Es zeigen:
Fig. 1 einen Teil einer Fahrzeugachse, die mit entsprechenden Rädern auf einem Prüfstand aufsteht und
Fig. 2 einen Teil einer erfindungsgemäßen Steuereinheit mit angeschlossenen Antriebsmotoren.

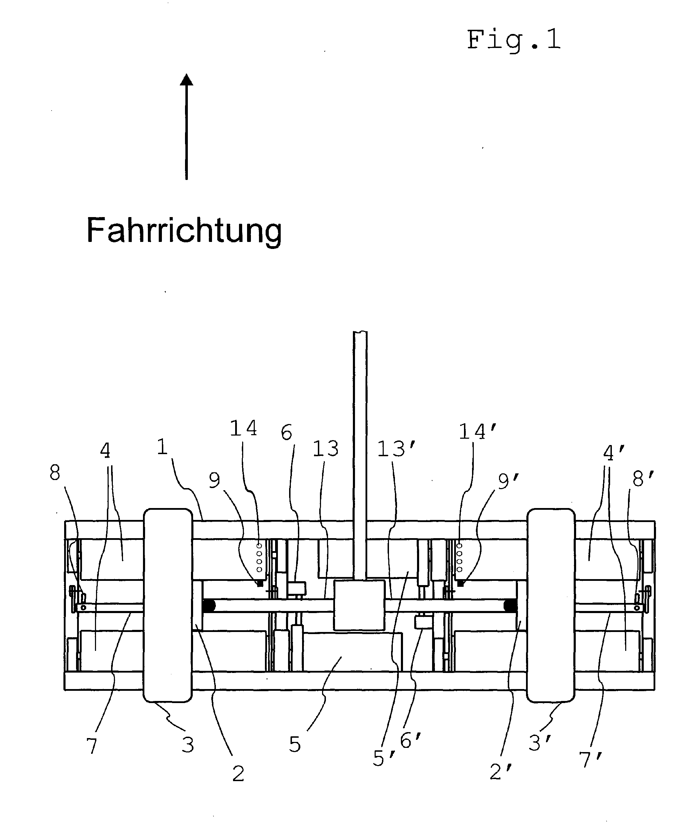

In Fig. 1 ist eine Fahrzeugachse 13, 13', die mit Fahrzeugrädern 3, 3' gekoppelt ist, gezeigt. Die Fahrzeugräder 3, 3' stehen auf Prüfstandsrollen 4, 4' bzw. Rollenpaaren eines Prüfstands 1 auf. In diesem Beispiel ist die Fahrzeugachse 13, 13' die Hinterachse des Fahrzeugs, da in diesem Beispiel die elektrische Feststell- bzw. Parkbremse auf die Hinterräder wirkt. Die Rollen 4, 4' werden von entsprechenden Antrieben 5, 5' angetrieben. Die jeweiligen Antriebsmomente werden über Kraftmesseinrichtungen bzw. Messmittel 6, 6' gemessen. Die Fahrrichtung des Fahrzeugs ist durch einen Pfeil angegeben. Weiterhin wirken Bremseinrichtungen (2, 2') auf die Fahrzeugräder (3,3'), wenn die Parkbremse betätigt wird.

Zum Abtasten der Reifenumfangsgeschwindigkeit ist eine Tastrolle 7, 7' zwischen den Bremsrollen bzw. zwischen dem jeweiligen Rollenpaar 4, 4' angeordnet. An den Tastrollen 7, 7' können beispielsweise inkrementale Impulsgeber bzw. Messmittel 8, 8' angeordnet sein. Die Messmittel 8, 8' können eine Umfangsgeschwindigkeit, Drehzahl bzw. Drehgeschwindigkeit erfassen. Weiterhin ist eine Abtastvorrichtung für die Drehgeschwindigkeit der Rollen bzw. Rollenpaare 4, 4' vorgesehen. Diese Abtastvorrichtung bzw. die Abtastmittel 9, 9' können eine Umfangsgeschwindigkeit, Drehzahl bzw. Drehgeschwindigkeit der Prüfstandsrollen bzw. Rollenpaare 4, 4' erfassen.

Zur Erfassung der Drehzahl bzw. Drehgeschwindigkeit der Rollenpaare 4, 4' können an einer jeweiligen Rolle 4, 4' entsprechende Markierungen 14, 14' vorgesehen sein. Diese Markierungen können von dem Abtastmittel 9,9' erfasst werden und die Abtastmittel 9, 9' und/oder eine Steuereinheit kann daraus eine entsprechende Drehzahl bzw. eine Drehgeschwindigkeit ermitteln. Selbiges gilt für die Messmittel 8, 8'.

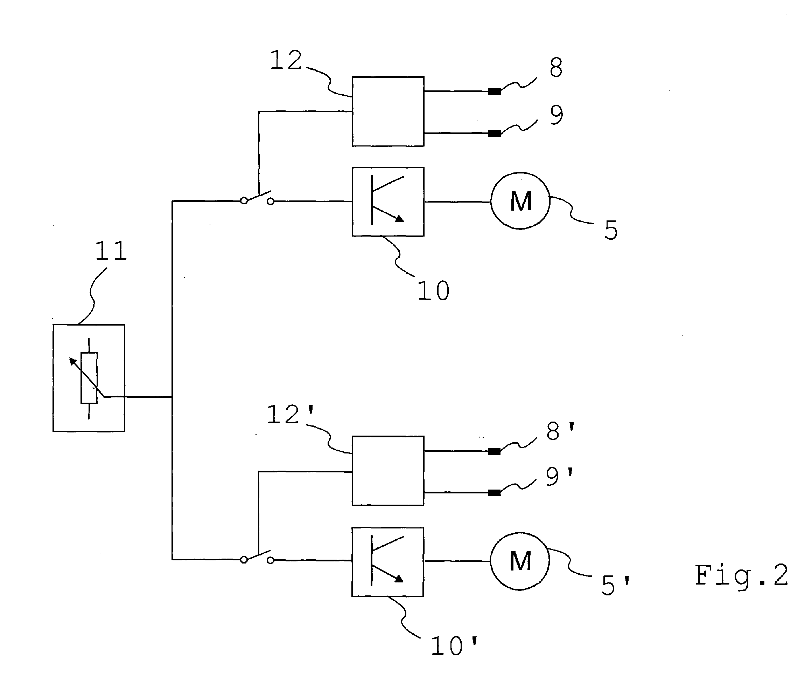

Fig. 2 zeigt einen Teil einer Steuereinheit gemäß der Erfindung. Die Antriebe 5, 5' können von sog. Softstartern 10, 10' mit Energie versorgt werden. Dazu kann von einem Sollwertgeber 11 das Motormoment langsam von Null bis zu einem Maximum erhöht werden. Bei einer intakten Feststell- bzw. Parkbremse bleiben jedoch die Räder 3, 3' blockiert, so dass die Impulsgeber 8, 8'; 9, 9' bzw. die Messmittel und die Abtastmittel keine Impulse erhalten. Durch ein weiteres Erhöhen der Antriebsmomente der Motoren 5, 5' steigen auch die Kräfte an den Kraftmesseinrichtungen 6,6' zur Erfassung der Bremsmomente. Wenn die Kräfte die für dieses Fahrzeug vorgeschriebenen Werte übersteigen, kann beispielsweise der Vorgang abgebrochen werden und das Fahrzeug kann von der Steuereinheit als "in Ordnung" bewertet werden. Ansonsten können von dem Sollwertgeber 11 die Antriebsmomente weiter erhöht werden, bis die Feststell- bzw. Parkbremse das Fahrzeugrad 3, 3' nicht mehr halten kann. Dies kann dadurch detektiert werden, dass sowohl die Messmittel 8, 8' als auch die Abtastmittel 9, 9' eine entsprechende Drehzahl bzw. Drehgeschwindigkeit feststellen. Das Gleiche gilt alternativ oder gemeinsam für beide Seiten des Prüfstands (die rechte und linke Seite der jeweiligen Fahrzeugachse).

Die bis zu diesem Zeitpunkt auftretenden Kräfte können in der Steuereinheit gespeichert werden und/oder mit vorgeschriebenen Werten verglichen und beurteilt werden. Ist die Feststell- bzw. Parkbremse in Ordnung, kann ein weiteres Ansteigen der Bremskraft dazu führen, dass sich die Bremsrollen bzw. die Rollenpaare 4, 4' zu drehen beginnen, ohne dass sich die Fahrzeugräder 3, 3' mitdrehen. D. h., die Rollen bzw. Rollenpaare 4, 4' rutschen gegenüber dem Fahrzeugrad 3, 3' durch, was eine Zerstörung des Reifens zur Folge haben kann.

Bei diesem Vorgang bedeutet das, dass an den Abtastmitteln 9 oder 9' eine Geschwindigkeit gemessen wird, während die Radumfangsgeschwindigkeit noch Null ist und damit die Signale an den Messmitteln 8, 8' keine Geschwindigkeit ausgeben (bzw. keine Signale ausgeben, die von der Steuereinheit in eine Geschwindigkeit umgesetzt werden können). Dies kann von Komparatoren 12, 12' erkannt werden, und der jeweilige Antrieb 5, 5' kann abgeschaltet werden. In diesem Fall ist die Feststell- bzw. Parkbremse unabhängig von den Bremskräften als "in Ordnung" einzustufen, da die Bremse mehr Bremskraft aufbringen kann als die Reifen auf einer Straße aufbringen könnten.

Die vorgenannten Ausführungsbeispiele und Merkmale können in beliebiger Weise miteinander kombiniert werden.

## Patentansprüche

1. Vorrichtung zur Prüfung von elektrischen Feststell- bzw. Parkbremsen von Fahrzeugen, mit
zwei Rollenpaaren (4, 4') die jeweilig mit einem Antrieb (5, 5') verbunden sind, wobei die Antriebe (5, 5') mit jeweils einer Kraftmesseinrichtung (6, 6') zur Erfassung eines Bremsmoments gekoppelt sind,
Tastrollen (7, 7'), die zwischen den Rollenpaaren (4, 4') angeordnet sind und einer
Steuereinheit zum Ansteuern der Antriebe (5, 5'),
**dadurch gekennzeichnet, dass**
zur Prüfung der elektrischen Feststell- bzw. Parkbremse die Antriebe (5, 5') von der Steuereinheit derart angesteuert werden, dass bei stehendem Fahrzeug und nach einer Aktivierung der Feststell- bzw. Parkbremse die Antriebe (5, 5') durch ein kontinuierliches Steigern des Antriebsmoments gestartet werden und durch eine Überwachung der Drehzahlen bzw. Drehgeschwindigkeiten der Rollenpaare (4, 4') und der Tastrollen (7, 7') eine Prüfung der elektrischen Feststell- bzw. Parkbremse durchgeführt wird.

2. Vorrichtung nach Anspruch 1; **dadurch gekennzeichnet, dass** Messmittel (8, 8') vorgesehen sind, die eine Drehzahl bzw. eine Drehgeschwindigkeit der Tastrollen (7, 7') erfassen und Abtastmittel (9, 9') vorgesehen sind, die eine Drehzahl bzw. eine Drehgeschwindigkeit der Rollenpaare (4, 4') erfassen.

3. Vorrichtung nach Anspruch 1 oder 2, **dadurch gekennzeichnet, dass** die Steuereinheit die Drehzahl bzw. Drehgeschwindigkeit der Tastrollen (7, 7') und der Rollenpaare (4, 4') vergleicht, eine Differenz ermittelt, diese Differenz mit einem vorbestimmten Differenzwert vergleicht und bei der Ermittlung eines Überschreitens des vorbestimmten Differenzwertes die Antriebe (5, 5') abschaltet.

4. Vorrichtung nach zumindest einem der Ansprüche 1 bis 3, **dadurch gekennzeichnet, dass** die Steuereinheit die Messsignale der Messmittel (8, 8') und der Abtastmittel (9, 9') aufnimmt und während dem kontinuierlichen Steigern der Antriebsmomente der Antriebe (5, 5') die Drehzahlen bzw. Drehgeschwindigkeiten und die Signale der Kraftmesseinrichtung (6, 6') überwacht, wobei das Antriebsmoment des jeweiligen Antriebs (5, 5') kontinuierlich gesteigert wird, bis ein vorbestimmtes Bremsmoment erreicht ist, bis sich zumindest das zu prüfendes Fahrzeugrad (3, 3') zu drehen beginnt und/ oder bis der Kontakt zwischen Fahrzeugrad (3, 3') und Rollenpaar (4, 4') abbricht.

5. Vorrichtung nach Anspruch 4, **dadurch gekennzeichnet, dass** ein Drehen zumindest eines Fahrzeugrades (3, 3') durch die Messmittel (8, 8') und/ oder die Abtastmittel (9, 9') erfasst wird und das Abbrechen des Kontakts zwischen Fahrzeugrad (3, 3') und Rollenpaar (4, 4') dadurch erfasst wird, dass die Abtastmittel (9, 9') eine Drehung erfassen während die Messmittel (8, 8') keine Drehung erfassen.

6. Vorrichtung nach zumindest einem der Ansprüche 1 bis 5, **dadurch gekennzeichnet, dass** die Antriebe (5, 5') über eine Startvorrichtung gestartet werden.

7. Vorrichtung nach 6, **dadurch gekennzeichnet, dass** die Startvorrichtung eine über einen Thyristor gesteuerte Startvorrichtung ist.

8. Vorrichtung nach 6 oder 7, **dadurch gekennzeichnet, dass** die Startvorrichtung ein Frequenzumrichter ist.

9. Vorrichtung nach zumindest einem der Ansprüche 2 bis 8, **dadurch gekennzeichnet, dass** die Messmittel (8, 8') und die Abtastmittel (9, 9') durch Tachogeneratoren mit Komparatoren gebildet sind.

10. Vorrichtung nach zumindest einem der Ansprüche 2 bis 8, **dadurch gekennzeichnet, dass** die Messmittel (8, 8') und die Abtastmittel (9, 9') durch Inkrementalgeber gebildet sind.

11. Verfahren zur Prüfung von elektrischen Feststell- bzw. Parkbremsen von Fahrzeugen, wobei eine Steuereinheit zur Prüfung der elektrischen Feststell- bzw. Parkbremse Antriebe (5,°5'), die mit jeweiligen Rollenpaaren (4, 4') verbunden sind, auf denen Fahrzeugräder (3, 3') positioniert sind, derart ansteuert, dass bei stehendem Fahrzeug und nach einer Aktivierung der Feststell- bzw. Parkbremse die Antriebe (5, 5') durch ein kontinuierliches Steigern des Antriebsmoments gestartet werden und durch eine Überwachung der Drehzahlen bzw. Drehgeschwindigkeiten der Rollenpaare (4, 4') und von Tastrollen (7, 7'), die jeweilig mit einem Fahrzeugrad (3, 3') in Kontakt stehen, eine Prüfung der elektrischen Feststell- bzw. Parkbremse durchgeführt wird.

12. Verfahren nach Anspruch 11, wobei Messmittel (8, 8') vorgesehen sind, die eine Drehzahl bzw. eine Drehgeschwindigkeit der Tastrollen (7, 7') erfassen und Abtastmittel (9, 9') zur vorgesehen sind, die eine Drehzahl bzw. eine Drehgeschwindigkeit der Rollenpaare (4, 4') erfassen.

13. Verfahren nach Anspruch 11 oder 12, **dadurch gekennzeichnet, dass** die Steuereinheit die Drehzahl bzw. Drehgeschwindigkeit der Tastrollen (7, 7') und der Rollenpaare (4,°4') vergleicht, eine Differenz ermittelt, diese Differenz mit einem vorbestimmten Differenzwert vergleicht und bei der Ermittlung eines Überschreitens des vorbestimmten Differenzwertes die Antriebe (5, 5') abschaltet.

14. Verfahren nach zumindest einem der Ansprüche 11 bis 13, wobei die Steuereinheit die Messsignale der Messmittel (8, 8') und der Abtastmittel (9, 9') aufnimmt und während dem kontinuierlichen Hochfahren der Antriebsmomente der Antriebe (5,°5') die Drehzahlen bzw. Drehgeschwindigkeiten und die Signale der Kraftmesseinrichtung (6, 6') überwacht, wobei das Antriebsmoment des jeweiligen Antriebs (5, 5') kontinuierlich gesteigert wird, bis ein vorbestimmtes Bremsmoment erreicht ist, bis sich zumindest ein zu prüfendes Fahrzeugrad (3, 3') zu drehen beginnt und/oder bis der Kontakt zwischen Fahrzeugrad (3, 3') und Rollenpaar (4,°4') abbricht.

15. Verfahren nach zumindest einem der Ansprüche 11 bis 14, wobei ein Drehen zumindest eines Fahrzeugrades (3, 3') durch die Messmittel (8, 8') und/oder die Abtastmittel (9, 9') erfasst wird und das Abbrechen des Kontakts zwischen Fahrzeugrad (3, 3') und Rollenpaar (4, 4') dadurch erfasst wird, dass die Abtastmittel (9, 9') eine Drehung erfassen während die Messmittel (8, 8') keine Drehung erfassen.

16. Bremsenprüfstand mit einer Vorrichtung nach zumindest einem der Ansprüche 1 bis 10, wobei der Bremsenprüfstand in einen Park- bzw. Feststellbremsprüfmodus schaltbar ist.

17. Verwendung der Vorrichtung nach zumindest einem der Ansprüche 1 bis 10 für einen Bremsenprüfstand.
